# EUROPÄISCHE PATENTSCHRIFT

(11) **EP 1 530 772 B1**
(45) Veröffentlichungstag und Bekanntmachung des Hinweises auf die Patenterteilung: **10.08.2011**
(21) Anmeldenummer: 03792132.7
(22) Anmeldetag: 15.08.2003
(51) Int. Cl.: G06Q 10/00

(54) **VERFAHREN UND VORRICHTUNG ZUM ÜBERMITTELN VON BENACHRICHTIGUNGEN**
METHOD AND DEVICE FOR THE TRANSMISSION OF NOTIFICATIONS
PROCEDE ET DISPOSITIF DE TRANSMISSION DE NOTIFICATIONS

(30) Priorität: 16.08.2002 DE 10238345
(43) Veröffentlichungstag der Anmeldung: 18.05.2005
(73) Patentinhaber: Deutsche Post AG, 53113 Bonn (DE)
(72) Erfinder: MAYER, Boris, 53129 Bonn (DE); BÜSCH, Barbara, 53567 Asbach (DE)
(74) Vertreter: Jostarndt, Hans-Dieter
(86) Internationale Anmeldenummer: PCT/DE2003/002666
(87) Internationale Veröffentlichungsnummer: WO 2004/019242

(56) Entgegenhaltungen:
- EP-A- 0 491 367
- WO-A-02/50705
- US-A- 6 047 264
- US-B1- 6 220 509

## Beschreibung

Die Erfindung betrifft ein Verfahren zum Übermitteln, von Benachrichtigungen mittels einer Benachrichtigungskomponente an Benutzer einer elektronischen Paketfachanlage innerhalb eines Postvrersandsystems, bei dem Daten aus wenigstens einer Datenbank an eine zentrale Versendekomponente übermittelt und dort in Benachrichtigungsinformationen umgewandelt werden und die Benachrichtigungsinformationen an eine Kommunikationsschnittstelle und von der Kommunikationsschnittstelle an wenigstens ein Empfangsgerät übermittelt werden, wobei Benachrichtigungsaufträge in einem speichermodul gespeichert werden und eine Steuerschaltung wenigstens einen Teil der Aufforderungen zur Übermittlung von Benachrichtigungen an das Speichermodul übermittelt und ein Lesemodul die in dem Speichermodul enthaltenen Berlachrichtigungsaufträge erfasst und an die zentrale Versendekomponente übermittelt.

Die Erfindung betrifft ferner eine Vorrichtung zum Übersenden von Benachrichtigungen an Nutzer einer elektronischen Paketfachanlage innerhalb eines Postversandsystems, die über wenigstens eine Datenbank, eine zentrale Versendekomponente und eine Kommunikationsschnittsstelle zur Übermittlung der Benachrichtigungsinformationen an Empfängergeräte verfügt.

Die Erfindung betrifft insbesondere ein Verfahren und eine Vorrichtung, um Absenden oder Empfänger von Postsendungen über den Status der Sendung zu informieren.

Ein gattungsgemäßes Verfahren wird in der französischen Patentanmeldung FR 2 563 987 offenbart. Bei diesem bekannten Verfahren wird eine Information über einen Belegungszustand eines elektronischen Paketfachs in einer Datenbank eines Servers gespeichert und kann dort abgerufen werden.

Ein weiteres gattungsgemäßes Benachrichtigungsverfahren ist aus der US-Patentschrift US 5 790 974 bekannt, Bei diesem Verfahren sind zwei verschiedene Datenbanken, die jeweils Termininformationen enthalten, miteinander verbunden und enthalten jeweils Software-Agenten, die einen Datenabgleich zwischen den Datenbanken ermöglichen.

Ein weiteres gattungsgemäßes Verfahren ist aus der US-patentschrift 6 064 976 bekannt. Bei diesem Verfahren wird überprüft, ob ein Benutzer sich in einem vorgebbaren Bereich befinden. Bei Anwesenheit des Benutzers in dem Bereich werden die tatsächliche Ankunftszeit des Benutzers und eine vorgesehene Ankunftszeit des Benutzers miteinander verglichen.

Die US-Patentschrift 6 047 264 offenbart ferner ein Verfahren zur Übermittlung des Status einer Sendung eines Nutzers, bei dem bei der Bestellung einer Sendung durch einen Nutzer ein Eintrag in einer zentralen Datenbank erzeugt wird. Ändert sich der Status der Sendung beispielsweise bei der Übergabe an ein Zustellunternehmen, dem Transport zu verschiedenen Stationen oder bei der Einlieferung am Zielort, wird die Status Änderung in der Datenbak erfasst. Diese Erfassung kann manuell oder elektronisch erfolgen. Eine Benachrichtigungskomponente fragt mittels eines Abfragemoduls kontinuierlich Statusänderungen in der Datenbank ab und erzeugt Nachrichten an den betreffenden Nutzer einer Sendung, für welche sich der Status geändert hat. Die Benachrichtigung erfolgt vorzugsweise per E-Mail.

Der Erfindung liegt die Aufgabe zugrunde, ein Postversandsystem zu entwickeln, das eine möglichst zuverlässige und schnelle individuelle Benachrichtigung von Benutzern ermöglicht.

Insbesondere soll sich die Erfindung dafür eignen, an eine Vielzahl von Benutzern jeweils individuelle Nachrichten zu übermitteln.

Die Erfindung schlägt ein Postversandsystem vor, das eine elektronische Paketfachanlage, eine Vorrichtung zum Übersenden von Benachrichtigungen an Nutzer der elektronischen Paketfachanlage sowie jeweils ein Empfangsgerät für einen oder mehrere Nutzer der elektronischen Paketfachanlage umfasst. Die Vorrichtung verfügt über wenigstens eine Datenbank, eine zentrale Versendekomponente zur Umwandlung von Daten der Datenbank in Benachrichtigungsinformationen und eine Kommunikationsschnittsstelle zur Übermittlung der Benachrichtigungsinformationen an die Empfängergeräte. Die Vorrichtung umfasst eine externe Schnittstelle für den Empfang von Informationen über Ereignisse an der elektronischen Paketfachanlage, die mit einer Steuerungsschaltung verbunden ist, welche mit einem Übertragungsmittel zum Übertragen von Benachrichtigungsaufträgen an ein die Benachrichtigungsaufträge speicherndes Speichermodul ausgestattet ist. Das Speichermodul ist mit einer Leseeinheit verbunden, welche die Benachrichtigungsaufträge an die zentrale Versendekomponente übermittelt.

Die Erfindung hat beispielsweise den Vorteil, dass bei Einlieferung einer Postsendung in einem Paketfach einer elektronischen Paketfachanlage automatisch eine Information an die externe Schnittstelle übermittelt. Die externe Schnittstelle leitet diese Information weiter. Bei einer Weiterleitung der Information, beziehungsweise einer hieraus abgeleiteten Aufforderung zur Übermittlung einer Nachricht an einen oder mehrere Empfänger.

Bei einer vorteilhaften Weiterbildung der Erfindung ist in der zentralen Versendekomponente wenigstens ein Template gespeichert, um die von der Datenbank übermittelten Daten in die Benachrichtigungsinformationen umzuwandeln.

Von den Zeichnungen zeigt
- Fig. 1: Komponentensicht des Benachrichtungs- systems,

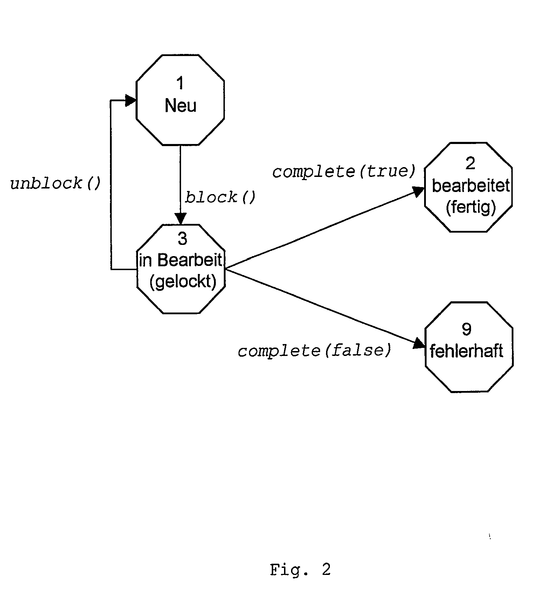

- Fig. 2: Statusdiagramm für Aufforderungen zur Übermittlung von Nachrichten,
- Fig. 3: Sequenz-Diagramm I - neuer Event

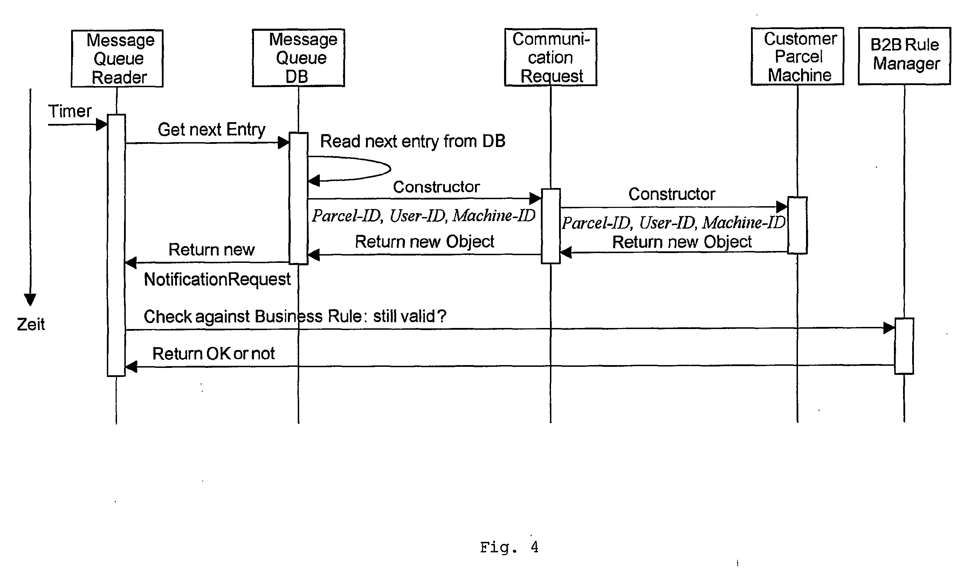

- Fig. 4: Sequenz-Diagramm II - Auslesen der an- stehenden Benachrichtigungen

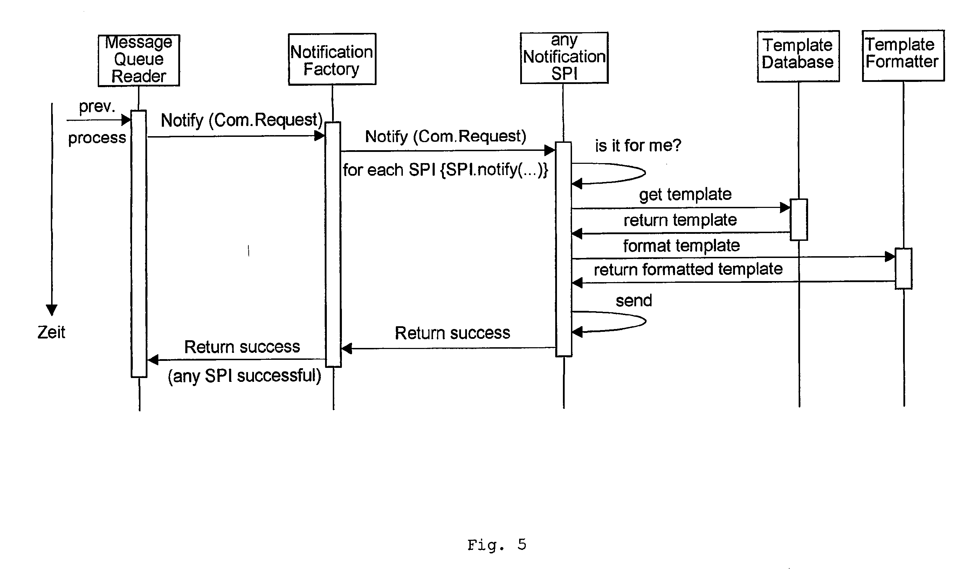

- Fig. 5: Sequenz-Diagramm III - Versenden der Benachrichtigung

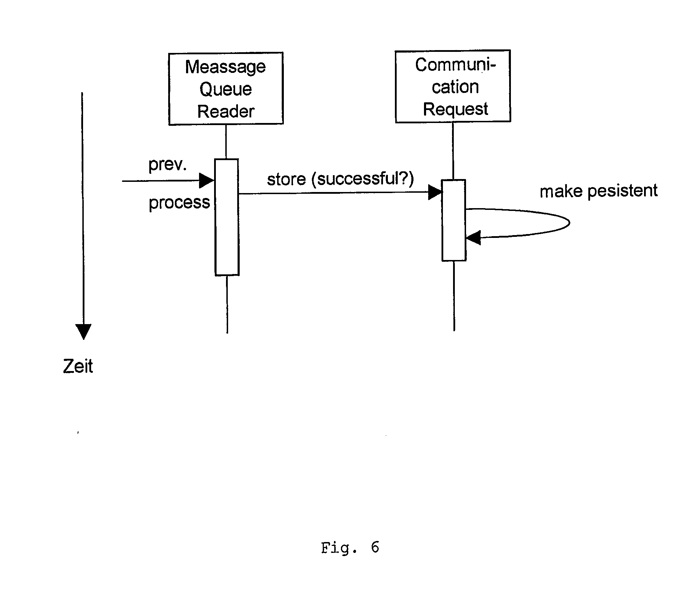

- Fig. 6: Sequenze-Diagramm IV - Abspeichern des Ergebnisses

Nachfolgend wird ein Einsatz erfindungsgemäßer Verfahren und Vorrichtungen zur Benachrichtigung dargestellt.

Die dargestellten Benachrichtigungskomponenten werden am Beispiel der Benachrichtigung von Benutzern eines Logistiksystems, insbesondere eines Transportsystems für Postsendungen dargestellt.

Die Erfindung ist weder auf die dargestellten Ausführungsbeispiele noch auf den Einsatz in einem Logistiksystem beschränkt. Es ist jedoch besonders vorteilhaft, ein Logistiksystem mit den dargestellten Benachrichtigungskomponenten auszustatten.

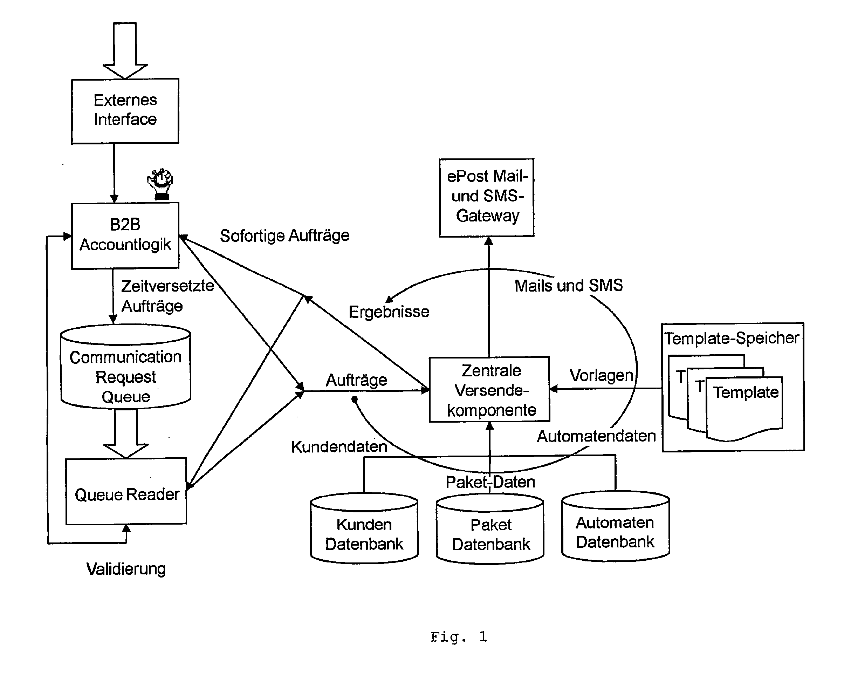

In Fig. 1 sind Bestandteile einer Benachrichtigungskomponente, die in ein Versandlogistiksystem integriert ist, dargestellt.

Die Benachrichtigungskomponente enthält eine externe Schnittstelle EI für den Empfang von Ereignisdaten ED des Versandlogistiksystems.

Die externe Schnittstelle EI ist mit einer Steuerungsschaltung AL verbunden. Die Steuerungsschaltung AL ist mit Übertragungsmitteln zum Übertragen von Auftragsanforderungen an die zentrale Versendekomponente ZVK und an die Communication Request Queue CRC ausgestattet.

Die Communication Request Queue CRC ist vorzugsweise als ein zur Speicherung von Benachrichtungsaufträgen dienendes Speichermodul ausgestaltet. Das zur Speicherung der Benachrichtungsaufträge dienende Speichermodul ist mit einer Leseeinheit CR verbunden.

Die Leseeinheit CR ist über eine Datenleitung mit der zentralen Versendekomponente ZVK verbunden.

Die Benachrichtigungskomponente verfügt über ein externes Interface, in das Aufträge in eine Message Queue eingetragen werden. Diese Aufträge werden timer-gesteuert von der zentralen Komponente regelmäßig ausgelesen um Daten aus der Kunden-, der Paket- und der Automaten-Datenbank ergänzt und mittels verschiedener Templates in ein push-orientiertes Mittel zur Übertragung von Informationen, beispielsweise eine Mail oder SMS umgewandelt und über eine geeignete Kommunikationsschnittstelle, vorzugsweise einen Mail- und SMS-Gateway versendet.

### Extern aufrufbare Funktionen

### Datenbankzugriff

Der Datenbank-Zugriff erfolgt unter Nutzung geeigneter Zugriffsmittel, vorzugsweise basierend auf der EJB-Technologie über Java-Entity-Beams.
Hierbei wird der Zugriff auf die Datenbanken transparent gekapselt. Durch das Erzeugen des Home-Interfaces eines Beans und das anschließende Suchen mit "ejbFindByPrimaryKey" wird ein über den PRIMARY KEY identifizierter Datenbank-Eintrag gelesen.

Die Begriffe Kundendatenbank, Paketdatenbank und Automatendatenbank sind abstrakter Natur, die entsprechenden Informationen beziehen sich nur auf eine oder mehrere Tabellen innerhalb derselben Datenbankinstanz. Durch die Nutzung der EJB kann später allerdings eine Auftrennung in verschiedene Instanzen oder sogar Datenbanken transparent erfolgen.

### Kommunikation zum Mail-/SMS-Gateway

Die Kommunikation zwischen der Benachrichtigungs-Komponente und dem Mail- und SMS-Gateway erfolgt über die Standard-Java-Klassen zur SMTP-Kommunikation.

### Logging

Fehler beim Versenden von Mails oder SMS müssen in einer Fehler-LOG-Datei mitgeloggt werden. Diese Fehler-LOG-Dateien müssen regelmäßig überwacht werden, um z.B. den Ausfall eines Gateways feststellen zu können. Sollen sämtliche versandten Benachrichtigungen ebenfalls mitgeloggt werden, wird hierzu eine eigene LOG-Datei verwendet, um die Fehlerüberwachung zu vereinfachen.

### Designvorschläge und Einschränkungen

### Datenbank

### Existierende Datenbanken

Um das Übermitteln von Benachrichtigungen reibungslos zu gestalten, sollte Zugriff auf die folgenden Datenbanken des Logistiksystems sichergestellt werden:
- Kundendatenbank: liefert Informationen zu einem Kunden, identifiziert durch die Kundennummer
- Paketdatenbank: liefert Informationen zu einem Paket, identifiziert durch eine eindeutige Paketnummer.
- Automaten-Datenbank: liefert Informationen über den Standort eines Automaten, identifiziert durch die die Automaten-ID. Diese ist Teil der Paket-ID.

### Communication Request Datenbank

Es ist zweckmäßig, eine zusätzliche Datenbanktabelle anzulegen, in der zu sendende Benachrichtigungen abgelegt werden. Die Tabelle dient auch als Zwischenspeicher für zu sendende zweite und dritte Benachrichtigungen. Die Tabelle soll nur der Verwaltung der Queue dienen, konkrete Informationen zu Paketen und Empfängern werden jeweils immer aus der Kunden- oder Paketdatenbank gelesen.

| Feld | Beschreibung | Typ | Beispiel |
|---|---|---|---|
| Interne Felder, die zur Durchführung der Versendung benötigt werden | | | |
| ID | Eindeutiger Schlüssel zur Identi- fizierung der Einträge, wird intern generiert | NUMBER(16) PRIMARY KEY | |
| InsertDate | Datum des Einfügens in die Queue, wird intern generiert | DATE | |
| Completion Date | Datum der vollständigen Bearbeitung (Status = 2) bzw. des Fehlschlagens (Status = 9) | DATE | |
| RetryCount | Anzahl der fehlgeschlagenen vorherigen Versuche | NUMBER(3) | |
| State | Status des Requests | NUMMER(3) | 1 = neu |
| | | | 2 = bearbeitet (fertig) |
| | | | 3 = in Bearbeitung (gelockt) |
| | | | 9 = fehlerhaft |
| State | Status des Requests | NUMBER(3) | 1 = neu |
| | | | 2 = bearbeitet (fertig) |
| | | | 3 = in Bearbeitung (geloggt) |
| | | | 9 = fehlerhaft |

| Von außen vorgegebene Felder | | | |
|---|---|---|---|
| Communication | Gibt den Kommunikationsweg an | VARCHAR(12) | SMS, PlainText, User |
| Type | | | (= beim User abgelegte bevorzugte Methode) |
| | | | (erweiterbar um FAX, PAGER, HTMLMail, RFCl149, ...) |
| SendDate | Datum und Uhrzeit, nach dem versendet werden soll | DATE | |
| RecipientID | User-ID des Empfängers | VARCHAR(16) | LP_4711, LC_1234, US_0815 |
| ParcelD | Paketnummer (kann leer sein) | VARCHAR(16) | |
| | | | |
| Template | Name des zu nutzenden Templates | VARCHAR(12) | BNK1, BNK2, BNK3 |
| Communication Flags | Parameter zur Steuerung der Versendung, werden durch die B2B-Komponente gesetzt, um bei späteren Nachfragen die getroffenen Entscheidungen in der Mandantenlogik nachvollziehen zu können. | NUMBER(8) | CheckParcelInMachine DelaySMSSending |

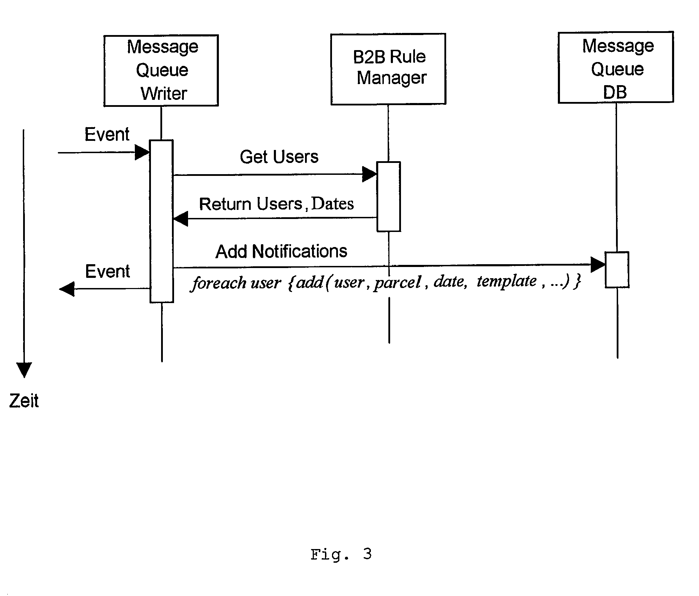

Bevorzugte Sequenz-Diagramme werden nachfolgend dargestellt: Fig. 3 zeigt ein Sequenz-Diagramm für ein neues Benachrichtigungsereignis, beispielsweise ein Einstellen eines Pakets in einem Fach einer Paketfachanlage.

Dieses Ereignis (Event) wird an eine Nachrichtenerzeugungseinheit MQW übermittelt. Die Nachrichtenerzeugungseinheit MQW sendet an eine Datenbank zur Verwaltung von Benutzerdaten B2BRM eine Aufforderung zur Übermittlung von Benutzerdaten. Die .. B2BRM sendet die Informationen über die Benutzer und die zugehörigen Daten an die .. MQW. Diese Informationen werden zusammen mit zusätzlichen Benachrichtigungsinformationen, beispielsweise über den Empfänger und/oder Absender der Postsendungen, die in die Paketfächer eingebracht wurden, beziehungsweise abgeholt werden können, an eine Nachrichtenspeichereinheit MQWB übermittelt.

Ein Auslesen der anstehenden Benachrichtigungen kann sowohl push-orientiert als auch pull-orientiert erfolgen.

Die folgende bevorzugte Durchführungsform des Auslesens von Benachrichtigungen vereint die Vorteile einer push-orientierten Behandlung der zu berücksichtigenden Informationen mit einer pull-orientierten Behandlung.

Die Ausführungsform sieht vor, dass die Benachrichtigung aufgrund eines Ereignisses, in einer besonders bevorzugten Ausführungsform eines Zeitsignals, das durch einen Zeitgeber (Timer) erfolgt, an die Nachrichtenspeichereinheit übermittelt wird.

Die MQR übermittelt eine Aufforderung zum Lesen neuer Einträge an die Nachrichtenspeichereinheit MQDB. Die Nachrichtenspeichereinheit MQP liest die Eintragsinformationen von einer Datenbank und übermittelt sendungsspezifische Informationen, insbesondere eine Identifikationsnummer für einzelne Paketfächer, beziehungsweise darin eingebrachte Postsendungen (Parcel-ID, Benutzeridentifikationsangaben (User-ID) und/oder Informationen über die elektronische Paketfachanlage (Machine-ID) an ein zur Speicherung von Benachrichtigungsaufträgen dienendes Speichermodul CRC. Das Speichermodul CRC leitet diese Identifikationsangaben an geeignete Empfänger, beispielsweise Benutzer C der elektronischen Paketfachanlage, Beteiligte des Logistiksystems oder an die elektronische Paketfachanlage weiter.

Die genannten Empfänger, beziehungsweise für sie handelnde Datenverarbeitungseinheiten, senden ein neues Datenobjekt an das zur Speicherung von Benachrichtigungsaufträgen dienende Speichermodul CRC. Das Speichermodul leitet das neue Objekt an die Nachrichtenspeichereinheit MQDB weiter. Die Nachrichtenspeichereinheit MQDB sendet anschließend einen neuen Notification Request.

### Klassen

Eine besonders bevorzugte Ausführungsform der Erfindung zeichnet sich durch einen Einsatz verschiedener Klassen von Benachrichtigungen aus. Vorzugsweise wird zwischen virtuellen Klassen und Singleton-Klassen unterschieden.

Eine Nachrichtenleseeinheit MQR liest die Einträge aus der Message-Queue, erstellt *Notification Request Data Container-*Objekte und reicht diese an die *Notification Factory* Instanz.

### Message Queue DB

Die Klasse dient als Kapselung des Zugriffs auf die DatenbankTabelle mit der Message-Queue. Sie stellt folgende Methoden bereit:
*InitReader ()*
*GetNextEntry ()*
*AddEntry ()*

### Notification Request Data Container

Die Klasse ist ein Datencontainer für die Einträge in der Message-Queue und die hinterlegten Daten in der Kunden-, Paket- und Automaten-Datenbank. Die Klasse stellt Get/Set-Methoden für alle benötigten Felder bereit.

### Customer-DB

Die Klasse dient als Kapselung des Zugriffs auf die DatenbankTabelle mit der Kundendatenbank. Sie erlaubt das Auslesen der Kundendaten anhand einer Kunden-ID.

### Parcel-DB

Die Klasse dient als Kapselung des Zugriffs auf die DatenbankTabelle mit der Paketdatenbank. Sie erlaubt das Auslesen der Paketdaten anhand einer Paket-ID.

### Automat-DB

Die Klasse dient als Kapselung des Zugriffs auf die DatenbankTabelle mit der Automatendatenbank. Sie erlaubt das Auslesen der Automatendaten anhand einer Automaten-ID.

### Notification Factory

Diese Klasse ist die zentrale Verwaltung der Benachrichtigungs-Service Provider Interfaces. In ihr wird eine Liste aller vorhandenen Benachrichtigungs-Service Provider Interfaces intern verwaltet.

Neben Funktionen zur Verwaltung der Notification-SPI's stellt sie die Methode
*bool machet( Notification Request Data Container * )*
bereit, die für ein übergebenes *Notification Request Data Con*tainer-Objekt alle notwendigen Benachrichtigungen versendet. Hierzu wird das *Notification Request Data Container*-Objekt an alle Notification-SPI's übergeben.

### Base Notification SPI

Diese Klasse ist die Basis-Klasse für alle Benachrichtigungs-Implementierungen. Sie stellt die zu überschreibende Methode
*bool machet( Notification Request Data Container * )*
bereit, die eine Benachrichtigung versendet (falls dies aus den übermittelten Daten möglich ist und gewünscht wird). Zunächst wird es zwei Implementierungen geben zum Versenden von Plain Text-Mails und zum Versenden von SMS. Weitere Implementierungen (für z.B. HTML-formattierte Mail, Pager, Fax, FunCard, ...) können leicht hinzugefügt werden.

### PlainTextMail Notification SPI

Implementierung des *Base Notification SPI* für das Versenden von Plain Text-Mails

### SMS Notification SPI

Implementierung des *Base Notification SPI* für das Versenden von SMS

### Klasse Template Database

Diese Klasse erlaubt den Zugriff auf Templates anhand mehrerer Schlüssel.

### Overview of member variables and member functions

| | |
|---|---|
| **Class name** | de.post24.NotificationSystem.TemplateDB |
| **Inherits from** | - - - |
| **Implements** | - - - |
| **Public methods** | TemplateDB (); |
| | |
| | String GetTemplate (String class, String type, String locale, bool usedfault) |
| | |

### Specification of member variables and member functions

String GetTemplate (String class, String type, String locale, bool usedefault)
Liefert ein Template entsprechend den übergebenen Parametern
- In class: gibt die Klassifizierung des Template an (PlainTextMail, SMS)
- In type: gibt die Art des Templates an (Re- gistration, Change, NewParcel, New- PODParcel)
- In locale: dient zur Unterscheidung verschiedener Sprach- und Landes- versionen (t.N. "de-DE" oder "en- US").
- In usedefault: hier kann eingestellt werden, ob eine Default-Sprache zurückgegeben werden soll, wenn die angeforderte Sprache nicht existiert, oder ein leerer String.
- Return: die Methode liefert das passende Template oder einen leeren String, wenn kein passendes Template gefun- den wurde

### Template Formatter

Diese Klasse dient zur Formatierung der Templates mit den zu übermittelnden Daten. Sie stellt eine Methode bereit:
*String FormatTemplate (String template, Notification Request Data Container* **, int maxlen, String [] neededTokens)*

Alle Platzhalter in template werden durch die entsprechenden Werte ersetzt. Falls die maximale Länge maxlen gesetzt ist, werden Feldinhalte abgekürzt, um diese maximale Länge nicht zu überschreiten. In *neededTokens* kann eine Liste von Platzhaltern übergeben werden, deren Existenz im Template überprüft wird.

Die Benachrichtigungskomponente dient insbesondere bei einem Logistiksystem mit einer Zustellung und/oder Abholung von Paketen in elektronischen Paketfachanlagen der Generierung und Versendung von Kunden-Benachrichtigungen. Hierzu werden über ein Interface Ereignisse wie Kundenregistrierung, Änderung von Kundenstammdaten, Paketeinlieferung und -Abholung gemeldet. Die Benachrichtigungskomponente erstellt anhand hinterlegter Informationen eine oder mehrere push-orientierte Benachrichtigungen, wie e-mails und/oder SMS und versendet diese über eine geeignete, vorzugsweise push-orientierte Schnittstelle, beispielsweise einen e-mail- oder SMS-Gateway. Vorzugsweise überwacht außerdem die Benachrichtigungskomponente die Paket-Abholung und versendet gegebenenfalls zweite und dritte Benachrichtigungen.

Die erfindungsgemäße Benachrichtigungs-Komponente ist Bestandteil eines erfindungsgemäßen Logistiksystems.

Die Benachrichtigungskomponente ist vorzugsweise ein modularer Bestandteil des Logistiksystems. Vorzugsweise beinhaltet die Benachrichtigungskomponente automatisierte Benachrichtigungsvorgänge, die wenigstens einzelne Bestandteile für eine Automatisierung des Logistiksystems enthalten. Vorzugsweise wird der Gesamtprozess des Logistiksystems integriert.

Vorzugsweise wird die Benachrichtigungskomponente von außen über Ereignisse informiert. Die Ereignisse sind vorzugsweise in verschiedene Klassen eingeordnet und lösen jeweils vorher festgelegte, beziehungsweise festlegbare und gegebenenfalls veränderbare Verarbeitungsschritte durch die Benachrichtigungskomponente aus. Ein Beispiel für ein derartiges äußeres Ereignis ist die Einlieferung eines Paketes einer elektronischen Paketfachanlage, die ein Bestandteil des Logistiksystems ist.

Die Benachrichtigungskomponente sichert das Übermitteln sämtlicher Benachrichtigungen. Dies sind sowohl Benachrichtigungen an automatisiert verarbeitende Datenverarbeitungseinheiten als auch an Empfänger. Die Benachrichtigungen können sowohl einfach als auch mehrfach erfolgen, sodass diese automatisierte Benachrichtigungskomponente auch ein automatisches Absenden von Erinnerungen ermöglicht.

Auf die dargestellte Weise ermöglicht die Benachrichtigungs-komponente eine Fortbildung des Logistiksystems, eine Anpassung an Auslassungen und Nutzungen des Logistiksystems und insbesondere eine Integration von im Wesentlichen oder vollständig automatisiert wirkenden Komponenten, wie elektronischen Paketfachanlagen in das Logistiksystem.

### Bezugszeichenliste:

| | | |
|---|---|---|
| AD | - | Datenbank |
| AL | - | Steuerschaltung |
| BI | - | Benachrichtigungsinformation |
| CR | - | Lesemodul |
| CRC | - | Speichermodul |
| EI | - | externe Schnittstelle |
| KT | - | Datenbank |
| MQR | - | Nachrichtenleseeinheit |
| MQW | - | Nachrichtenerzeugungseinheit |
| MQDB | - | Nachrichtenspeichereinheit |
| PD | - | Datenbank |
| T1 | - | Template |
| T2 | - | Template |
| T3 | - | Template |
| ZVK | - | Versendekomponente |

## Patentansprüche

1. Postversandsystem, das eine elektronische Paketfachanlage, eine Vorrichtung zum Übersenden von Benachrichtigungen an Nutzer der elektronischen Paketfachanlage sowie jeweils ein Empfangsgerät für einen oder mehrere Nutzer der elektronischen Paketfachanlage umfasst, wobei die Vorrichtung über wenigstens eine Datenbank (KT, PD, AD), eine zentrale Versendekomponente (ZVK) zur Umwandlung von Daten der Datenbank (KT, PD, AD) in Benachrichtigungsinformationen (BI) und eine Kommunikationsschnittsstelle zur Übermittlung der Benachrichtigungsinformationen (BI) an die Empfängergeräte verfügt, wobei die Vorrichtung eine externe Schnittstelle (EI) für den Empfang von Informationen über Ereignisse an der elektronischen Paketfachanlage umfasst, die mit einer Steuerungsschaltung (AL) verbunden ist, welche mit einem Übertragungsmittel zum Übertragen von Benachrichtigungsaufträgen an ein die Benachrichtigungsaufträge speicherndes Speichermodul (CRC) ausgestattet ist, und wobei das Speichermodul (CRC) mit einer Leseeinheit (CR) verbunden ist, welche die Benachrichtigungsaufträge an die zentrale Versendekomponente (ZVK) übermittelt.

2. Postversandsystem nach Anspruch 1,
**dadurch gekennzeichnet, dass** in der zentralen Versendekomponente (ZVK) wenigstens ein Template (T1, T2, T3) gespeichert ist, um die von der Datenbank (KT, PD, AD) übermittelten Daten in die Benachrichtigungsinformationen (BI) umzuwandeln.

## Claims

1. A postal shipping system comprising an electronic parcel compartment system, a device for transmitting notifications to users of the electronic parcel compartment system as well as a receiving device for one or more users of the electronic parcel compartment system, whereby the device has at least one database (KT, PD, AD), a central sending component (ZVK) for converting data from the database (KT, PD, AD) into notification information (BI) and a communication interface for the transmission of the notification information (BI) to the receiving device, whereby the device comprises an external interface (EI) that serves for receiving information about events at the electronic parcel compartment system and that is connected to a control circuit (AL) equipped with transmission means for the transmission of notification requests to a storage module (CRC) that stores the notification requests, and whereby the storage module (CRC) is connected to a reading unit (CR) that transmits the notification requests to the central sending component (ZVK).

2. The postal shipping system according to Claim 1, **characterized in that** at least one template (T1, T2, T3) is stored in the central sending component (ZVK) in order to convert the data transmitted from the database (KT, PD, AD) into the notification information (BI).

## Revendications

1. Système d'expédition postale, comprenant une installation électronique à casiers pour paquets, un dispositif pour transmettre des notifications à des utilisateurs de l'installation électronique à casiers pour paquets et respectivement un appareil récepteur pour un ou plusieurs utilisateurs de l'installation électronique à casiers pour paquets, le dispositif disposant d'au moins une base de données (KT, PD, AD), une composante d'expédition centrale (ZVK) pour convertir des données de la base de données (KT, PD, AD) en informations de notification (BI) et une interface de communication pour transmettre les informations de notification (BI) aux appareils récepteurs, le dispositif comprenant une interface externe (El) pour la réception d'informations sur des événements au niveau de l'installation électronique à casiers pour paquets, laquelle interface est reliée à un circuit de commande (AL) qui est équipé d'un moyen de transmission pour transmettre des ordres de notification à un module de mémoire (CRC) qui stocke les ordres de notification, et le module de mémoire (CRC) étant relié à une unité de lecture (CR) qui transmet les ordres de notification à la composante d'expédition centrale (ZVK).

2. Système d'expédition postale selon la revendication 1, **caractérisé en ce qu'**au moins un modèle (T1, T2, T3) est stocké dans la composante d'expédition centrale (ZVK) afin de convertir les données transmises par la base de données (KT, PD, AD) en les informations de notification (BI).
